# EUROPEAN PATENT SPECIFICATION

(11) **EP 3 228 949 B1**
(45) Date of publication and mention of the grant of the patent: **05.06.2019**
(21) Application number: 15825000.1
(22) Date of filing: 24.07.2015
(51) Int. Cl.: F24H 1/18, F24H 9/12, F28D 20/00

(54) **WATER TANK WITH PERMEATION FILTERING AND REFLECTING TYPE COLD-HOT WATER MIXING PREVENTION DEVICE**
WASSERTANK MIT PERMEATIONSFILTERUNG UND REFLEKTIERENDER KALT-WARM-WASSERMISCHVORBEUGUNGSVORRICHTUNG
RÉSERVOIR D'EAU AVEC DISPOSITIF ÉVITANT LE MÉLANGE DE L'EAU FROIDE-CHAUDE DE TYPE RÉFLÉCHISSANT ET DE FILTRAGE PAR PERMÉATION

(30) Priority: 25.07.2014 CN 201420416541 U
(43) Date of publication of application: 11.10.2017
(73) Proprietor: Shenzhen Chaoqi Parking Technology Co., Ltd., Shenzhen, Guangdong Province 518054 (CN)
(72) Inventor: YANG, Xianjie, Dezhou Shandong 253000 (CN)
(74) Representative: Herrero & Asociados, S.L.
(86) International application number: PCT/CN2015/084996
(87) International publication number: WO 2016/011969

(56) References cited:
- EP-A1- 2 679 928
- WO-A1-2013/159415
- CN-U- 201 539 971
- CN-U- 201 539 971
- CN-U- 202 521 870
- CN-U- 202 521 870
- CN-U- 202 835 806
- CN-U- 202 835 806
- CN-U- 203 980 688
- CN-Y- 201 028 754
- CN-Y- 201 028 754
- DE-A1-102005 062 660
- JP-A- 2000 097 500
- JP-A- 2003 038 350

## Description

### Background of the Present Invention

### Field of Invention

The present invention relates to a water tank, in particular to a water tank with a permeation filtering and reflecting type cold-hot water mixing prevention device, which is used for a solar water heater, a heat-pump water heater, an electric water heater, a gas water heater or a waste heat recovery system.

### Description of Related Arts

When a traditional water tank used for a solar water heater, a heat-pump water heater, an electric water heater, a gas water heater or a waste heat recovery system is used, cold water flows into a water tank liner from a water inlet pipe of the water tank, simultaneously hot water flows outside from a water outlet pipe of the water tank and is supplied for use by a user, the cold water and the hot water are directly stirred and mixed in the water tank liner, and the temperature of water in the water tank gradually decreases. As a result, the traditional water tank has the following defects that: 1. the cold water and the hot water are mixed; 2. the hot water output rate of the water tank is low and thus how to improve the hot water output rate of the water tank is a technical problem which always exists in the field; and 3. when the cold water of the traditional water tank enters the water tank liner, since the flow rate is relatively great, the cold water directly flushes into a hot water area of the water tank liner such that the cold water and the hot water are mixed, consequently the temperature of the hot water in the hot water area decreases, even the hot water cannot be used and the demand of the user cannot be better satisfied. Examples of the state of the art can be seen on CN202835806 and DE102005062660.

### Summary of the Present Invention

The purpose of the present invention is to overcome the above-mentioned defects in the prior art and provide a water tank with a permeation filtering and reflecting type cold-hot water mixing prevention device, which can effectively prevent cold water and hot water from being mixed with each other, improve the hot water output rate of the water tank and can better satisfy demands of users.

In order to realize the above-mentioned purpose, the technical solution provided by the present invention is as follow: a water tank with a permeation filtering and reflecting type cold-hot water mixing prevention device comprises a water tank shell and a water tank liner mounted in the water tank shell, a water tank water inlet pipe and a water tank water outlet pipe respectively communicated with the water tank liner are mounted on the water tank shell, the water tank further comprises a connecting pipe and a permeation filtering and reflecting type cold-hot water mixing prevention device, the connecting pipe is mounted inside the water tank water inlet pipe, and the permeation filtering and reflecting type cold-hot water mixing prevention device is connected to one end of the connecting pipe and is located at an inner bottom of the water tank liner.

According to the invention, the permeation filtering and reflecting type cold-hot water mixing prevention device comprises a mixing prevention device pipe shank, a mounting seat, a reflector, filter screen covers and a permeation filtering object, one end of the mixing prevention device pipe shank is connected to the connecting pipe, the other end of the mixing prevention device pipe shank is hermetically connected to the reflector, the reflector is downwards arranged, the mounting seat is mounted on an outer wall of the mixing prevention device pipe shank, an opening of the mounting seat is upwards arranged, the filter screen covers and the permeation filtering object are respectively mounted at the opening of the mounting seat, the filter screen covers are located at a top and a bottom of the permeation filtering object, a filtering chamber is formed between the filter screen cover at the bottom of the permeation filtering object and the mounting seat, and a plurality of flow splitting holes which enable the inside of the mixing prevention device pipe shank to be communicated with the filtering chamber are formed in a pipe wall of the mixing prevention device pipe shank.

Preferably, in the above-mentioned technical solution of the water tank, a section shape of the reflector is parabolic.

As compared with the prior art, the present invention has the following beneficial effects that:
Since the permeation filtering and reflecting type cold-hot water mixing prevention device connected to the water tank water inlet pipe is mounted at the inner bottom of the water tank liner in the present invention, when hot water is used, cold water flows inside from the connecting pipe and then silently flows outside after being subjected to reflection and permeation filtration of the permeation filtering and reflecting type cold-hot water mixing prevention device, water gently translates upwards from the inner bottom of the water tank liner without causing disturbance inside, the cold water and the hot water are effectively prevented from being mixed with each other, a clear interface is always kept between the cold water and the hot water in the water tank liner in a process that the cold water ejects the hot water out, thereby the hot water output rate of the water tank is improved and the demands of users can be better satisfied.

### Brief Description of the Drawings

FIG. 1 illustrates a structural schematic view of a water tank with a permeation filtering and reflecting type cold-hot water mixing prevention device according to embodiment 1 of the present invention.
FIG. 2 illustrates an enlarged view of a position A in FIG. 1.
FIG. 3 illustrates a structural schematic view of a water tank with a permeation filtering and reflecting type cold-hot water mixing prevention device according to embodiment 2 which does not fall within the scope of the invention.
FIG. 4 illustrates an enlarged view of a position B in FIG. 3.
FIG. 5 illustrates a structural schematic view of a water tank with a permeation filtering and reflecting type cold-hot water mixing prevention device according to embodiment 3 which does not fall within the scope of the invention.
FIG. 6 illustrates an enlarged view of a position C in FIG. 5.

The water tank with the permeation filtering and reflecting type cold-hot water mixing prevention device provided by the present invention will be further described below with reference to the drawings in combination with the embodiments.

### Detailed Description of the Preferred Embodiments

The following embodiments are preferred embodiments of the water tank with the permeation filtering and reflecting type cold-hot water mixing prevention device provided by the present invention and do not thereby define the protection scope of the present invention.

### Embodiment 1

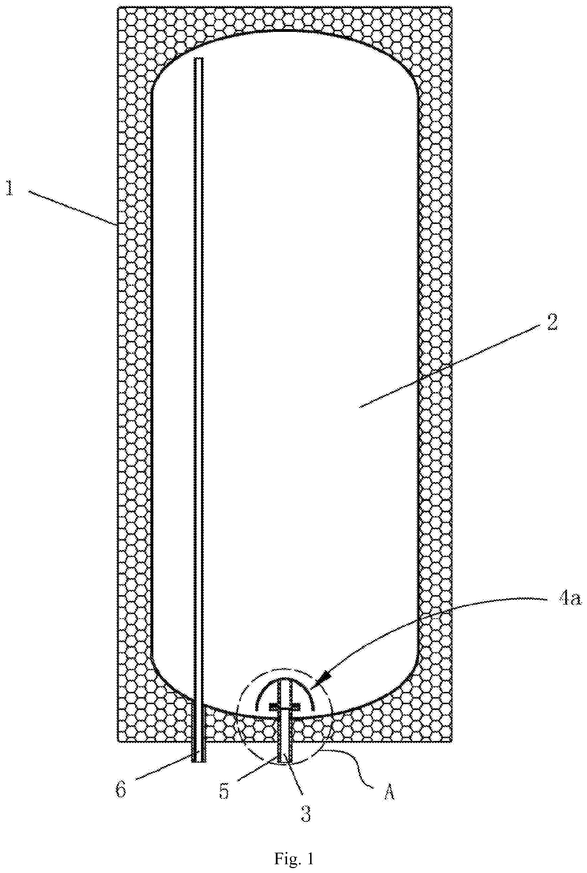

Please refer to FIG. 1 which illustrates a water tank with a permeation filtering and reflecting type cold-hot water mixing prevention device, comprising a water tank shell 1, a water tank liner 2, a connecting pipe 3 and a permeation filtering and reflecting type cold-hot water mixing prevention device 4a. Herein, the water tank liner 2 is mounted in the water tank shell 1, the water tank liner 2 is vertical, a heat preserving material is filled between the water tank shell 1 and the water tank liner 2, a water tank water inlet pipe 5 and a water tank water outlet pipe 6 respectively communicated with the water tank liner 2 are mounted at a bottom of the water tank shell 1, the water tank water outlet pipe 6 extends to an inner top of the water tank liner 2, and the permeation filtering and reflecting type cold-hot water mixing prevention device 4a is connected to one end of the connecting pipe 3 and is located at an inner bottom of the water tank liner 2.

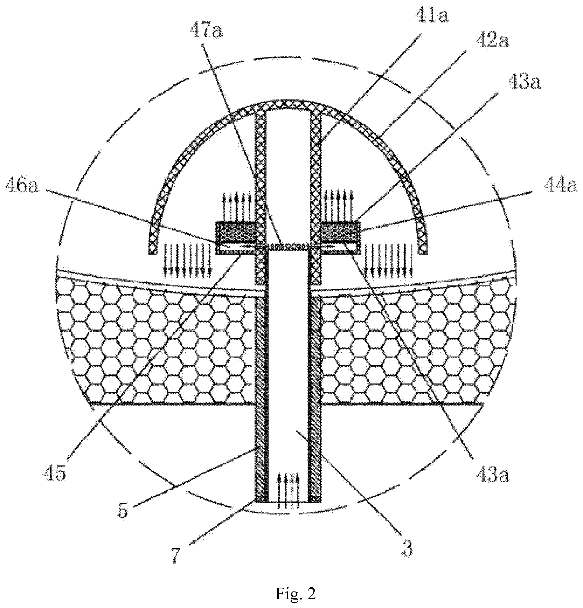

As illustrated in FIG. 2, specifically, the permeation filtering and reflecting type cold-hot water mixing prevention device 4a comprises a mixing prevention device pipe shank 41a, a reflector 42a, filter screen covers 43a, a permeation filtering object 44a and a mounting seat 45, one end of the mixing prevention device pipe shank 41a is connected to the connecting pipe 3, the other end of the mixing prevention device pipe shank 41a is hermetically connected to the reflector 42a, the reflector 42a is downwards arranged, the mounting seat 45 is mounted on an outer wall of the mixing prevention device pipe shank 41a, an opening of the mounting seat 45 is upwards arranged, the filter screen covers 43a and the permeation filtering object 44a are respectively mounted at the opening of the mounting seat 45, the filter screen covers 43a are located at a top and a bottom of the permeation filtering object 44a, a filtering chamber 46a is formed between the filter screen cover 43a at the bottom of the permeation filtering object 44a and the mounting seat 45, a plurality of flow splitting holes 47a which enable the inside of the mixing prevention device pipe shank 41a to be communicated with the filtering chamber 46a are formed in a pipe wall of the mixing prevention device pipe shank 41a, and the flow splitting holes 47a are uniformly distributed. Herein, the permeation filtering object 44a consists of particle fillers, fiber fillers, a filter screen, a filter membrane or other materials having a permeation function.

In this embodiment, a section shape of the reflector 42a is arranged to be parabolic. Of course, the reflector 42a may also be in other shapes such as arc shape and bottomless trapezoid (" 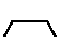 ") shape, as long as the reflector 42 can reflect cold water after passing through the permeation filtering object 44a to flow downwards, without being limited to the shape in this embodiment.

In addition, in order to seal the connecting pipe 3 and the water tank water inlet pipe 5 and prevent water leakage, a sealing ring 7 is mounted between the connecting pipe 3 and the water tank water inlet pipe 5.

The working principle of the permeation filtering and reflecting type cold-hot water mixing prevention device 4a in embodiment 1 is as follow:
As illustrated in FIG. 2, a flow direction of cold water is as shown by arrows, the cold water firstly enters the mixing prevention device pipe shank 41a of the permeation filtering and reflecting type cold-hot water mixing prevention device 4a through the connecting pipe 3, then enters the filtering chamber 46a from the flow splitting holes 47a in the pipe wall of the mixing prevention device pipe shank 41a and then sequentially passes through the filter screen cover 43a at the bottom of the permeation filtering object 44a, the permeation filtering object 44a and the filter screen cover 43a at the top of the permeation filtering object 44a, at this moment a water flow becomes uniform and slow, finally the cold water is reflected by the reflector 42a such that the cold water uniformly and slowly flows down to the inner bottom of the water tank liner 2, thereby the water gently translates upwards from the inner bottom of the water tank liner 2 without causing disturbance inside, the cold water and hot water are effectively prevented from being mixed with each other, a clear interface is always kept between the cold water and the hot water in the water tank liner 2 in a process that the cold water ejects the hot water out, thereby the hot water output rate of the water tank is improved and the demands of users can be better satisfied.

### Embodiment 2

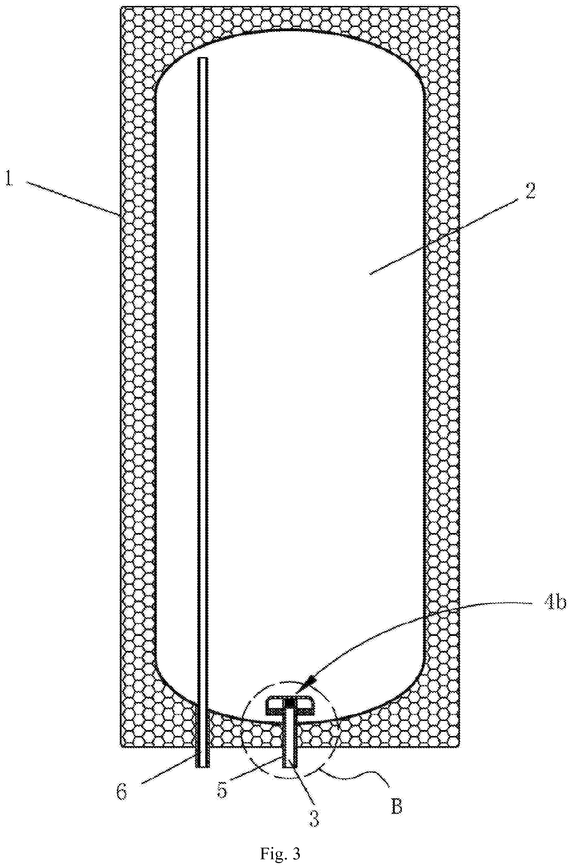

Please refer to FIG. 3 which illustrates another water tank with a permeation filtering and reflecting type cold-hot water mixing prevention device, comprising a water tank shell 1, a water tank liner 2, a connecting pipe 3 and a permeation filtering and reflecting type cold-hot water mixing prevention device 4b.It needs to be stated here that, except the permeation filtering and reflecting type cold-hot water mixing prevention device which is different from that in embodiment 1, other structures of the water tank with the permeation filtering and reflecting type cold-hot water mixing prevention device provided by embodiment 2 are all the same. The same structures are not repetitively described here and the difference will be described below in detail.

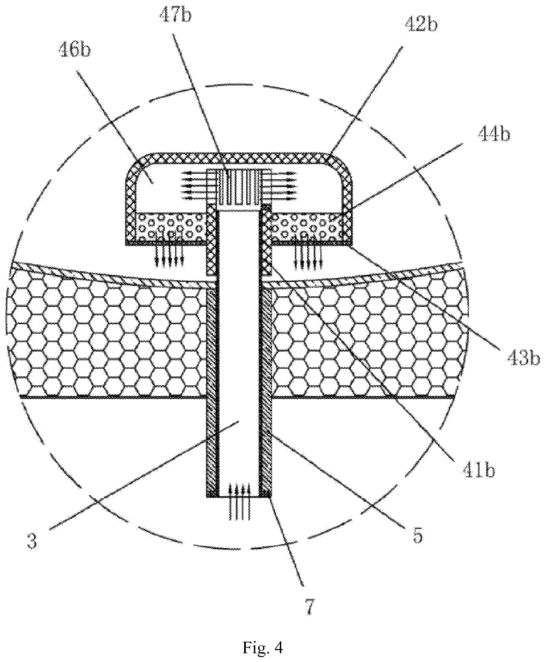

As illustrated in FIG. 4, specifically, the permeation filtering and reflecting type cold-hot water mixing prevention device 4b comprises a mixing prevention device pipe shank 41b, a reflector 42b, a filter screen cover 43b and a permeation filtering object 44b, one end of the mixing prevention device pipe shank 41b is connected to the connecting pipe 3, the filter screen cover 43b is mounted on an outer wall of the mixing prevention device pipe shank 41b, the reflector 42b is downwards mounted on the filter screen cover 43b, the permeation filtering object 44b is mounted at a top of the filter screen cover 43b and is located in the reflector 42b, a filtering chamber 46b is formed between a top of the permeation filtering object 44b and the reflector 42b, the other end of the mixing prevention device pipe shank 41b is closed, and a plurality of flow splitting holes 47b which enable the inside of the mixing prevention device pipe shank 41b to be communicated with the filtering chamber 46b are formed in a pipe wall of the other end of the mixing prevention device pipe shank 41b. In this embodiment, the reflector 42b is arranged to be bottle-cap-shaped.

The working principle of the permeation filtering and reflecting type cold-hot water mixing prevention device 4b in embodiment 2 is as follow:
As illustrated in FIG. 4, a flow direction of cold water is as shown by arrows, the cold water firstly enters the mixing prevention device pipe shank 41b of the permeation filtering and reflecting type cold-hot water mixing prevention device 4b through the connecting pipe 3, then enters the filtering chamber 46b in the reflector 42b from the flow splitting holes 47b in the pipe wall of the other end of the mixing prevention device pipe shank 41b, is reflected by the reflector 42b, then sequentially passes through the permeation filtering object 44b and the filter screen cover 43b at the bottom of the permeation filtering object 44b and flows down to the inner bottom of the water tank liner 2, at this moment a water flow becomes uniform and slow, thereby the water gently translates upwards from the inner bottom of the water tank liner 2 without causing disturbance inside, the cold water and hot water are effectively prevented from being mixed with each other, a clear interface is always kept between the cold water and the hot water in the water tank liner 2 in a process that the cold water ejects the hot water out, thereby the hot water output rate of the water tank is improved and the demands of users can be better satisfied.

### Embodiment 3

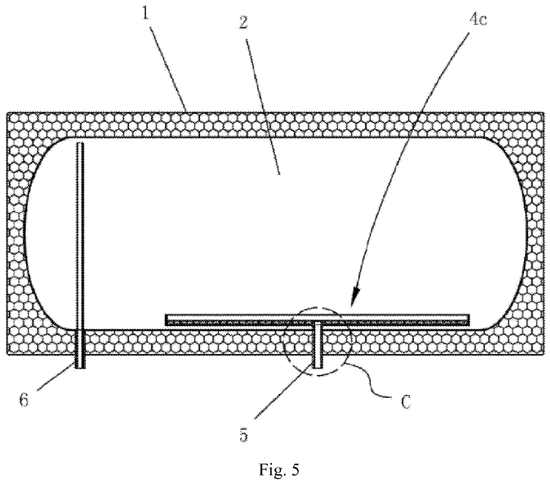

Please refer to FIG. 5 which illustrates another water tank with a permeation filtering and reflecting type cold-hot water mixing prevention device, comprising a water tank shell 1, a water tank liner 2, a connecting pipe 3 and a permeation filtering and reflecting type cold-hot water mixing prevention device 4c, wherein the water tank liner 2 is horizontal, i.e., the water tank is a horizontal water tank. It needs to be stated here that, except the permeation filtering and reflecting type cold-hot water mixing prevention device which is different from that in embodiment 1 and/or embodiment 2, other structures of the water tank with the permeation filtering and reflecting type cold-hot water mixing prevention device provided by embodiment 3 are all the same. The same structures are not repetitively described here and the difference will be described below in detail.

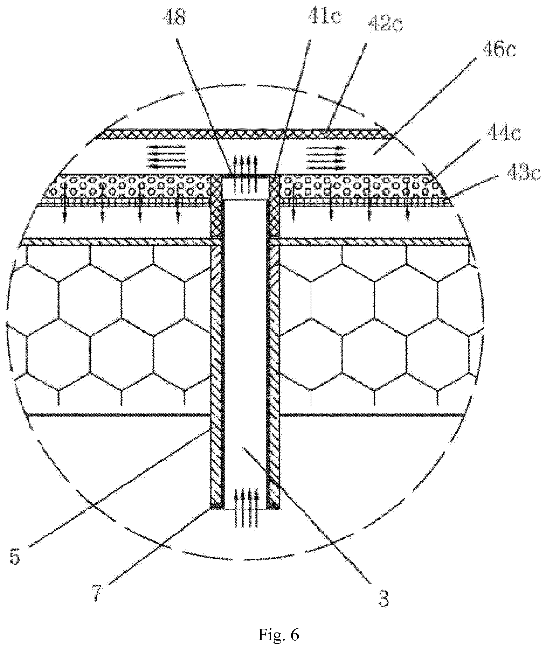

As illustrated in FIG. 6, specifically, the permeation filtering and reflecting type cold-hot water mixing prevention device 4c comprises a mixing prevention device pipe shank 41c, a reflector 42c, a filter screen cover 43c, a permeation filtering object 44c and a filter screen 48, the two ends of the mixing prevention device pipe shank 41c are open, one end of the mixing prevention device pipe shank 41c is connected to the connecting pipe 3, the filter screen cover 43c is mounted on an outer wall of the mixing prevention device pipe shank 41c, the reflector 42c is downwards mounted on the filter screen cover 43c, the permeation filtering object 44c is mounted at a top of the filter screen cover 43c and is located in the reflector 42c, a filtering chamber 46c is formed between a top of the permeation filtering object 44c and the reflector 42c, the filter screen 48 is mounted at a pipe mouth of the other end of the mixing prevention device pipe shank 41c, and the other end of the mixing prevention device pipe shank 41c is communicated with the filtering chamber 46c through the filter screen 48. In this embodiment, the length of the left and right ends of the reflector 42c may be properly extended according to the actual need to facilitate the improvement of the cold-hot water mixing prevention effect.

The working principle of the permeation filtering and reflecting type cold-hot water mixing prevention device 4c in embodiment 3 is as follow:
As illustrated in FIG. 6, a flow direction of cold water is as shown by arrows, the cold water firstly enters the mixing prevention device pipe shank 41c of the permeation filtering and reflecting type cold-hot water mixing prevention device 4c through the connecting pipe 3, then enters the filtering chamber 46c in the reflector 42c from the filter screen 48 at the other end of the mixing prevention device pipe shank 41c, is reflected by the reflector 42c, then sequentially passes through the permeation filtering object 44c and the filter screen cover 43c at the bottom of the permeation filtering object 44c and flows down to the inner bottom of the water tank liner 2, at this moment a water flow becomes uniform and slow, thereby the water gently translates upwards from the inner bottom of the water tank liner 2 without causing disturbance inside, the cold water and hot water are effectively prevented from being mixed with each other, a clear interface is always kept between the cold water and the hot water in the water tank liner 2 in a process that the cold water ejects the hot water out, thereby the hot water output rate of the water tank is improved and the demands of users can be better satisfied.

The above-mentioned embodiments are preferred implementation modes of the present invention. However, the implementation modes of the present invention are not limited by the above-mentioned embodiments. Any other variations, modifications, substitutions, combinations and simplifications which are made without departing from the scope of the present invention shall be considered as equivalent replacement modes and shall be all included in the protection scope of the present invention as defined by the appended claims.

## Claims

1. A water tank with a permeation filtering and reflecting type cold-hot water mixing prevention device (4a), comprising a water tank shell (1) and a water tank liner (2) mounted in the water tank shell (1), a water tank water inlet pipe (5) and a water tank water outlet pipe (6) respectively communicated with the water tank liner (2) being mounted on the water tank shell (1), wherein: the water tank further comprises a connecting pipe (3) and a permeation filtering and reflecting type cold-hot water mixing prevention device (4a), the connecting pipe (3) is mounted inside the water tank water inlet pipe (5), and the permeation filtering and reflecting type cold-hot water mixing prevention device (4a) is connected to one end of the connecting pipe (3) and is located at an inner bottom of the water tank liner (2);
**characterized in that** the permeation filtering and reflecting type cold-hot water mixing prevention device (4a) comprises a mixing prevention device pipe shank (41a), a mounting seat (45), a reflector (42a), filter screen covers (43a) and a permeation filtering object (44a), one end of the mixing prevention device pipe shank (41a) is connected to the connecting pipe (3), the other end of the mixing prevention device pipe shank (41a) is hermetically connected to the reflector (42a), the reflector (42a) is downwards arranged, the mounting seat (45) is mounted on an outer wall of the mixing prevention device pipe shank (41a), an opening of the mounting seat (45) is upwards arranged, the filter screen covers (43a) and the permeation filtering object (44a) are respectively mounted at the opening of the mounting seat (45), the filter screen covers (43a) are located at a top and a bottom of the permeation filtering object (44a), a filtering chamber (46a) is formed between the filter screen cover (43a) at the bottom of the permeation filtering object (44a) and the mounting seat (45), and a plurality of flow splitting holes (47a) which enable the inside of the mixing prevention device pipe shank (41a) to be communicated with the filtering chamber are formed in a pipe wall of the mixing prevention device pipe shank (41a).

2. The water tank with the permeation filtering and reflecting type cold-hot water mixing prevention device (4a) of claim 1, wherein: a section shape of the reflector (42a) is parabolic.

3. The water tank with the permeation filtering and reflecting type cold-hot water mixing prevention device (4a) of any one of claims 1-2, wherein: the permeation filtering object (44a) comprises particle fillers, fiber fillers, a filter screen or a filter membrane.

4. The water tank with the permeation filtering and reflecting type cold-hot water mixing prevention device (4a) of any one of claims 1-2, wherein: a sealing ring is mounted between the connecting pipe (3) and the water tank water inlet pipe (5).

5. The water tank with the permeation filtering and reflecting type cold-hot water mixing prevention device (4a) of any one of claims 1-2, wherein: a heat preserving material is filled between the water tank shell (1) and the water tank liner (2).

6. The water tank with the permeation filtering and reflecting type cold-hot water mixing prevention device (4a) of any one of claims 1-2, wherein: the water tank liner (2) is vertical or horizontal.

## Patentansprüche

1. Wassertank mit Permeationsfilterung und reflektierender Kalt-Warm-Wassermischvorbeugungsvorrichtung (4a), umfassend eine Wassertankhülle (1) und eine Wassertankauskleidung (2), die in der Wassertankhülle (1) montiert ist, ein Wassertank-Wasserzulaufrohr (5) und ein Wassertank-Wasserablaufrohr (6), die jeweils mit der Wassertankauskleidung (2) in Kontakt stehen, die an der Wassertankhülle montiert ist, wobei: der Wassertank überdies ein Verbindungsrohr (3) und eine Permeationsfilterung und reflektierende Kalt-Warm-Wassermischvorbeugungsvorrichtung (4a) umfasst, das Verbindungsrohr (3) im Innern des Wassertank-Wasserzulaufrohrs (5) montiert ist, und die Permeationsfilterung und reflektierende Kalt-Warm-Wassermischvorbeugungsvorrichtung (4a) mit einem Ende des Verbindungsrohrs (3) verbunden ist und sich an einem Innenboden der Wassertankauskleidung (2) befindet;
**dadurch gekennzeichnet, dass** die Permeationsfilterung und reflektierende Kalt-Warm-Wassermischvorbeugungsvorrichtung (4a) einen Mischvorbeugungsvorrichtungs-Rohrschaft (41a), einen Montagesitz (45), einen Reflektor (42a), Filtersiebabdeckungen (43a) und ein Permeationsfilterungsobjekt (44a) umfasst, ein Ende des Mischvorbeugungsvorrichtungs-Rohrschafts (41a) mit dem Verbindungsrohr (3) verbunden ist, das andere Ende des Mischvorbeugungsvorrichtungs-Rohrschafts (41a) hermetisch mit dem Reflektor (42a) verbunden ist, der Reflektor (42a) nach unten angeordnet ist, der Montagesitz (45) an einer Außenwand des Mischvorbeugungsvorrichtungs-Rohrschafts (41a) montiert ist, eine Öffnung des Montagesitzes nach oben angeordnet ist, die Filtersiebabdeckungen (43a) und das Permeationsfilterungsobjekt (44a) jeweils an der Öffnung des Montagesitzes (45) montiert sind, die Filtersiebabdeckungen (43a) an einer Oberseite und einer Unterseite des Permeationsfilterungsobjekts (44a) montiert sind, eine Filterungskammer (46a) zwischen der Filtersiebabdeckung (43a) an der Unterseite des Permeationsfilterungsobjekts (44a) und dem Montagesitz (45) gebildet ist und eine Vielzahl von Strömungsteilungslöchern (47a), die eine Verbindung des Innern des Mischvorbeugungsvorrichtungs-Rohrschafts (41a) mit der Filterungskammer ermöglichen, in einer Rohrwand des Mischvorbeugungsvorrichtungs-Rohrschafts (41a) gebildet sind.

2. Wassertank mit Permeationsfilterung und reflektierender Kalt-Warm-Wassermischvorbeugungsvorrichtung (4a) nach Anspruch 1, wobei: eine Abschnittsform des Reflektors (42a) parabolisch ist.

3. Wassertank mit Permeationsfilterung und reflektierender Kalt-Warm-Wassermischvorbeugungsvorrichtung (4a) nach einem der Ansprüche 1-2, wobei: das Permeationsfilterungsobjekt (44a) Partikelfüllstoffe, Faserfüllstoffe, ein Filtersieb oder eine Filtermembran umfasst.

4. Wassertank mit Permeationsfilterung und reflektierender Kalt-Warm-Wassermischvorbeugungsvorrichtung (4a) nach einem der Ansprüche 1-2, wobei: ein Dichtring zwischen dem Verbindungsrohr (3) und dem Wassertank-Wasserzulaufrohr (5) montiert ist.

5. Wassertank mit Permeationsfilterung und reflektierender Kalt-Warm-Wassermischvorbeugungsvorrichtung (4a) nach einem der Ansprüche 1-2, wobei: ein wärmekonservierendes Material zwischen die Wassertankhülle (1) und die Wassertankauskleidung (2) gefüllt wird.

6. Wassertank mit Permeationsfilterung und reflektierender Kalt-Warm-Wassermischvorbeugungsvorrichtung (4a) nach einem der Ansprüche 1-2, wobei: die Wassertankauskleidung (2) vertikal oder horizontal ist.

## Revendications

1. Un réservoir d'eau avec un dispositif empêchant le mélange d'eau froide/chaude par perméation et par réflexion (4a), comprenant une coque de réservoir d'eau (1) et une doublure de réservoir d'eau (2) monté dans la coque de réservoir d'eau (1), un tuyau d'arrivée d'eau de réservoir (5) et un tuyau de sortie d'eau du réservoir (6) communiquant respectivement avec la doublure de réservoir d'eau (2) étant montée sur la coque du réservoir d'eau (1), dans lequel : le réservoir d'eau comprenant en plus un tuyau de raccordement (3) et un dispositif empêchant le mélange d'eau froide/chaude par perméation et par réflexion (4a), le tuyau de raccordement (3) est monté à l'intérieur du tuyau d'arrivée d'eau du réservoir (5) et le dispositif de filtration par perméation et réfléchissant empêchant le mélange d'eau froide/chaude le dispositif (4a) est raccordé à une extrémité du tuyau de raccordement (3) et est situé à l'intérieur du fond de la doublure de réservoir d'eau (2); **caractérisé en ce que** dispositif empêchant le mélange d'eau froide/chaude par perméation et par réflexion (4a) comprend une tige du tuyau du dispositif empêchant le mélange (41a), siège de fixation (45), un réflecteur (42a), une couverture de tamis filtrant (43a) et un objet filtrant la perméation (44a), une extrémité de la tige du tuyau du dispositif empêchant le mélange (41a) est raccordée au tuyau de raccordement (3), l'autre extrémité de la tige de tuyau du dispositif empêchant le mélange (41a) est raccordée de manière hermétique au réflecteur (42a), le réflecteur (42a) est disposé vers le bas, le siège de fixation (45) est monté sur une parois extérieure de la tige du tuyau du dispositif empêchant le mélange (41a), une ouverture du siège de fixation (45) est disposé vers le haut, la couverture de tamis filtrant (43a) et l'objet filtrant la perméation (44a) sont respectivement montés à l'ouverture du siège de fixation (45), les couvertures de tamis filtrant (43a) sont situées en haut et en bas de l'objet filtrant la perméation (44a), une chambre filtrante (46a) est formée entre la couverture de tamis filtrant (43a) en haut de l'objet filtrant la perméation (44a) et le siège de fixation (45), et une pluralité de trous diviseur de flux (47a) qui permettent à l'intérieur de la tige du tuyau du dispositif empêchant le mélange (41a) d'être raccordée avec la chambre filtrante sont formés dans une parois la tige du tuyau du dispositif empêchant le mélange (41a).

2. Le réservoir d'eau avec un dispositif empêchant le mélange d'eau froide/chaude par perméation et par réflexion (4a) de la revendication 1, dans lequel : une forme de section du réflecteur (42a) est parabolique.

3. Le réservoir d'eau avec un dispositif empêchant le mélange d'eau froide/chaude par perméation et par réflexion (4a) selon l'une des revendication 1-2, dans lequel : l'objet filtrant la perméation (44a) comprend des charges à particule, des charges fibreuses, un tamis filtrant ou une membrane filtrante.

4. Le réservoir d'eau avec un dispositif empêchant le mélange d'eau froide/chaude par perméation et par réflexion (4a) selon l'une des revendications 1-2 dans lequel : une bague d'étanchéité est montée entre le tuyaux de raccordement (3) et le tuyau d'arrivée d'eau du réservoir (5).

5. Le réservoir d'eau avec un dispositif empêchant le mélange d'eau froide/chaude par perméation et par réflexion (4a) selon l'une des revendications 1-2 dans lequel : un matériaux conservant la chaleur rempli l'espace entre la coque de réservoir d'eau (1) et la doublure de réservoir d'eau (2).

6. Le réservoir d'eau avec un dispositif empêchant le mélange d'eau froide/chaude par perméation et par réflexion (4a) selon l'une des revendications 1-2 dans lequel : la doublure de réservoir d'eau (2) est verticale ou horizontale.
